# EUROPEAN PATENT APPLICATION

(11) **EP 4 539 198 A1**
(43) Date of publication of application: **16.04.2025**
(21) Application number: 24184238.4
(22) Date of filing: 25.06.2024
(51) Int. Cl.: H01M 10/42, H01M 10/0587

(54) **DEFORMATION ANALYSIS DEVICE FOR SECONDARY BATTERY AND METHOD THEREOF**

(30) Priority: 13.10.2023 KR 20230136717
(71) Applicant: Samsung SDI Co., Ltd., Yongin-si, Gyeonggi-do 17084 (KR); UNIST (Ulsan National Institute of Science and Technology), Ulsan 44919 (KR)
(72) Inventor: WOO, Seong Ho, 17084 Yongin-si (KR); KIM, Dae Sik, 17084 Yongin-si (KR); LEE, Sung Kook, 17084 Yongin-si (KR); KIM, Ji Young, 17084 Yongin-si (KR); LEE, Bo Ram, 17084 Yongin-si (KR); LEE, Hyun-Wook, 44919 Ulsan (KR); PARK, Changhyun, 44919 Ulsan (KR); JUNG, Ukhyun, 44919 Ulsan (KR)
(74) Representative: Marks & Clerk LLP

(57) **Abstract**

A method and device for analyzing deformation of a secondary battery having an electrode assembly with a tab received in a case, the deformation analysis method including obtaining a first image by performing computed tomography (CT) imaging on the secondary battery, calculating a first position of the tab from the first image, obtaining a number of charge and discharge cycles of the secondary battery after charging and discharging the secondary battery multiple times so that the secondary battery deteriorates, obtaining a second image by performing CT imaging on the secondary battery deteriorated, calculating a second position of the tab from the second image and determining that the electrode assembly is deformed if an amount of change between the first position and the second position is greater than a reference value.

## Description

### BACKGROUND

### 1. Field

The present disclosure relates to a deformation analysis device and method for a secondary battery.

### 2. Description of the Related Art

Secondary batteries are subjected to continuous charging and discharging, which causes various electrochemical reactions within the batteries, resulting in battery degradation and performance degradation. In particular, the internal deformation of a battery during charging and discharging is a factor affecting degradation and performance degradation. In order to analyze a deterioration phenomenon, destructive analysis methods, which generally involve disassembling the battery and conducting the analysis, were mainly used. However, such analysis methods inevitably cause damage to the inside of a battery during a disassembling process, make it difficult to determine the actual cause of performance deterioration and are limited in identifying the deterioration tendency as charging and discharging progresses.

The above information disclosed in this Background section is only for enhancement of understanding of the background of the disclosure.

### SUMMARY

Embodiments include a method for analyzing deformation of a secondary battery having an electrode assembly with a tab received in a case. The deformation analysis method includes obtaining a first image by performing computed tomography (CT) imaging on the secondary battery, calculating a first position of the tab from the first image, obtaining a number of charge and discharge cycles of the secondary battery after charging and discharging the secondary battery multiple times so that the secondary battery deteriorates, obtaining a second image by performing CT imaging on the secondary battery deteriorated, calculating a second position of the tab from the second image and determining that the electrode assembly is deformed if an amount of change between the first position and the second position is greater than a reference value.

The first and second positions may be defined as angles between a first straight line connecting the tab and an intersection of a core-long diameter and a core-short diameter of the electrode assembly, and a second straight line connecting the intersection and a winding trailing end of the electrode assembly.

The secondary battery may have a cylindrical shape.

The electrode assembly may be wound in a cylindrical shape in which a positive electrode plate, a separator and a negative electrode plate are stacked.

The tab may include a positive electrode tab coupled to the positive electrode plate or a negative electrode tab coupled to the negative electrode plate.

The winding trailing end may be a winding trailing end of the positive electrode plate or the negative electrode plate.

The reference value may be 1% to 5%.

Embodiments include a device for analyzing deformation of a secondary battery having an electrode assembly with a tab received in a case. The device includes a control circuit, a processor installed in the control circuit and a memory installed in the control circuit and operably coupled to the processor, wherein the processor executes a program code stored in the memory and is configured to obtain a first image by performing computed tomography (CT) imaging on the secondary battery, calculate a first position of the tab from the first image, obtain a number of charge and discharge cycles of the secondary battery after charging and discharging the secondary battery multiple times so that the secondary battery deteriorates, obtain a second image by performing CT imaging on the secondary battery deteriorated, calculate a second position of the tab from the second image and determine that the electrode assembly is deformed if an amount of change between the first position and the second position is greater than a reference value.

The first and second positions may be defined as angles between a first straight line connecting the tab and an intersection of a core-long diameter and a core-short diameter of the electrode assembly, and a second straight line connecting the intersection and a winding trailing end of the electrode assembly.

The secondary battery may have a cylindrical shape.

The electrode assembly may be wound in a cylindrical shape in which a positive electrode plate, a separator and a negative electrode plate are stacked.

The tab may include a positive electrode tab coupled to the positive electrode plate or a negative electrode tab coupled to the negative electrode plate.

The winding trailing end may be a winding trailing end of the positive electrode plate or the negative electrode plate.

The reference value may be 1% to 5%.

At least some of the above and other features of the invention are set out in the claims.

### BRIEF DESCRIPTION OF DRAWINGS

Features will become apparent to those of ordinary skill in the art by describing in detail example embodiments with reference to the attached drawings in which:
FIG. 1 is a block diagram showing the configuration of an example deformation analysis device for a secondary battery according to one or more embodiments of the present disclosure.
FIG. 2 is a flowchart showing a method for analyzing deformation of an example secondary battery according to one or more embodiments of the present disclosure.
FIGS. 3A and 3B are longitudinal and cross-sectional views, respectively, of an example secondary battery according to one or more embodiments of the present disclosure.
FIGS. 4A and 4B are graphs showing the amount of change in the tab position relative to the number of charge/discharge cycles of an example secondary battery according to one or more embodiments of the present disclosure.

### DETAILED DESCRIPTION

In the drawing figures, the dimensions of layers and regions may be exaggerated for clarity of illustration. It will also be understood that when a layer or element is referred to as being "on" another layer or substrate, it can be directly on the other layer or substrate, or intervening layers may also be present. Further, it will be understood that when a layer is referred to as being "under" another layer, it can be directly under, and one or more intervening layers may also be present. In addition, it will also be understood that when a layer is referred to as being "between" two layers, it can be the only layer between the two layers, or one or more intervening layers may also be present. Like reference numerals refer to like elements throughout.

In addition, a control unit (controller) and/or other related devices or components, according to the present disclosure, may be implemented using any suitable hardware, firmware (e.g., application specific semiconductor), software, or a suitable combination of software, firmware, and hardware. For example, the control unit (controller) and/or other related devices or components, according to the present disclosure, may be formed on a single integrated circuit chip, or separate integrated circuit chips. In addition, various components of the control unit (controller) may be implemented on a flexible printed circuit film, and may be formed on a substrate identical to a tape carrier package, a printed circuit board, or a control unit (controller). In addition, various components of the control unit (controller) may be a process or thread, running on one or more processors, in one or more computing devices, executing computer program instructions and interacting with other system components for performing the various functionalities described herein. The computer program instructions may be stored in a memory which may be implemented in a computing device using a standard memory device, for example, a random access memory (RAM). The computer program instructions may also be stored in other non-transitory computer readable media, for example, a CD-ROM, flash drive, or the like. In addition, a person of ordinary skill in the art should recognize that the functionality of various computing devices may be combined or integrated into a single computing device, or the functionality of a particular computing device may be distributed across one or more other computing devices without departing from the scope of the example embodiments of the present disclosure.

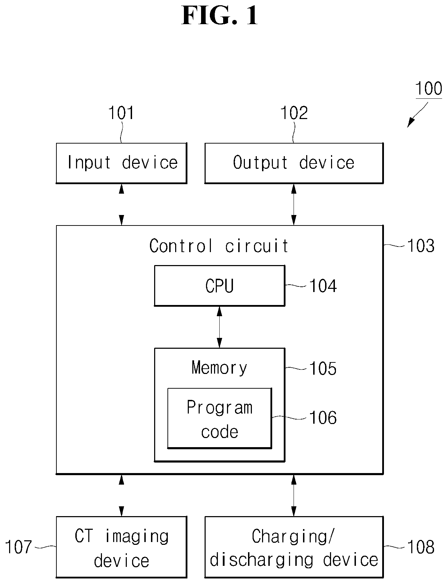

FIG. 1 is a block diagram showing the configuration of an example deformation analysis device 100 for a secondary battery according to one or more embodiments of the present disclosure. As shown in FIG. 1, the deformation analysis device 100 for a secondary battery may include an input device 101, an output device 102, a control circuit 103, a central processing unit (CPU) 104, a memory 105 and a program code 106. In some embodiments, the deformation analysis device 100 may further include a CT imaging device 107 and/or a charging/discharging device 108.

The control circuit 103 may execute the program code 106 stored in the memory 105 through the CPU 104 and may control the overall operation of the deformation analysis device 100. In some embodiments, the program code 106 may include an image analysis tool, for example, "ImageJ," which is open source software that can be downloaded online. However, the particular image analysis tool may vary.

The deformation analysis device 100 may receive data or information input by a user through the input device 101, for example, a keyboard or mouse, and output images or sounds through the output device 102, for example, a monitor or speaker. In some examples, the deformation analysis device 100 may receive a CT image directly or indirectly from the CT imaging device 107. In some embodiments, the deformation analysis device 100 may receive the number of charge/discharge cycles directly or indirectly from charging/discharging device 108. In one or more embodiments, the deformation analysis device 100 may receive data paired with the CT image and the number of charge/discharge cycles.

In the memory 105, various settings (e.g., reference values or reference ratios) for implementing embodiments the present disclosure may be stored, for example, received CT images, received charge/discharge cycle numbers and program code 106 for controlling the operation of the deformation analysis device 100.

The CT imaging device 107 may obtain a first image by performing CT imaging on the secondary battery before the progress of charge/discharge cycles, obtain a second image by performing CT imaging on the secondary battery after the progress of charge/discharge cycles and transmit the first and second images directly or indirectly to the deformation analysis device 100.

In some embodiments, the CT imaging device 107 may be controlled by direct control of the control circuit 103, so that the control circuit 103 may obtain or receive images directly from the CT imaging device 107. In one or more embodiments, the first and second images obtained from the CT imaging device 107 may be indirectly provided to the control circuit 103 through the input device 101.

The charging/discharging device 108 may charge a secondary battery that is to be subject to CT imaging by providing current and voltage to the secondary battery, or may discharge the secondary battery by connecting a load to the secondary battery. In some embodiments, the charging/discharging device 108 may be controlled by direct control of the control circuit 103, so that the secondary battery can be charged or discharged through the charging/discharging device 108. In embodiment(s), the secondary battery may be charged or discharged through the charging/discharging device 108 without intervention of control circuit 103.

In some embodiments, the charging/discharging device 108 may be controlled by direct control of the control circuit 103, so that the control circuit 103 may obtain or receive the number of charge/discharge cycles directly from the charging/discharging device 108. In embodiment(s), the number of charge/discharge cycles obtained from the charging/discharging device 108 may be indirectly provided to the control circuit 103 through the input device 101.

In one or more embodiments, CT images for each number of charge/discharge cycles of the secondary battery may be provided to the control circuit 103 in the form of mutually matched data. In other words, whenever a charge/discharge cycle of the secondary battery elapses, CT imaging may be performed on the secondary battery, and thus data including the number of charge/discharge cycles and the CT images may be directly or indirectly provided to the control circuit 103. In some embodiments, CT imaging may be performed approximately once every 50 to approximately 100 cycles. However, the frequency of CT imaging may vary.

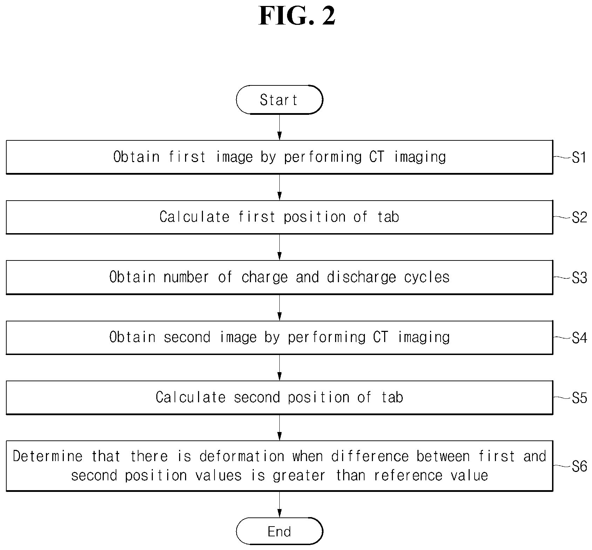

FIG. 2 is a flowchart showing one example of a method for analyzing deformation of an example secondary battery according to one or more embodiments of the present disclosure. As shown in FIG. 2, the method for analyzing deformation of an example secondary battery may include obtaining a first image by performing CT imaging on the secondary battery (S1), which may be the first step, calculating a first position of a tab from the first image (S2), which may be the second step, obtaining the number of charge and discharge cycles of the secondary battery (S3), which may be the third step, obtaining a second image by performing CT imaging on the secondary battery (S4), which may be the fourth step, calculating a second position of the tab from the second image (S5), which may be the fifth step, and determining that the secondary battery is deformed if the amount of change between the first position and the second position is greater than a reference value (S6), which may be the sixth step.

In step (S1), the control circuit 103 may obtain or receive the first image from the CT imaging device 107. In some embodiments, the secondary battery may be subjected to CT imaging by the CT imaging device 107 and the CT-imaged first image may be transmitted from the CT imaging device 107 to the control circuit 103. As described above, the CT imaging device 107 may operate in response to a control signal from the control circuit 103, or may operate independently to transmit the first image to the control circuit 103 directly or indirectly.

In step (S2), the control circuit 103 may calculate the first position of the tab in the electrode assembly from the first image. As will be explained in further detail below, the first position may be defined as the angle between a first straight line connecting the tab and the intersection of a core-long diameter and the core-short diameter of the electrode assembly, and the second straight line connecting the intersection and the winding trailing end of the electrode assembly.

In step (S3), the control circuit 103 may obtain or receive the number of charge and discharge cycles of the secondary battery from the charging/discharging device 108. In one or more embodiments, the secondary battery may be charged and discharged multiple times by the charging/discharging device 108 and the number of cycles after charging and discharging may be transmitted from the charging/discharging device 108 to the control circuit 103. As described above, the charging/discharging device 108 may operate by a control signal from the control circuit 103 or may operate independently to charge and discharge the secondary battery multiple times and may directly or indirectly transmit the number of charge/discharge cycles to the control circuit 103. In some embodiments, the secondary battery may deteriorate or age due to charging and discharging of the secondary battery and deformation may occur to the case and/or the electrode assembly of the secondary battery. In other words, as the secondary battery deteriorates, the position of the tab coupled to the electrode assembly may change.

In step (S4), the control circuit 103 may obtain or receive a second image from the CT imaging device 107. In embodiment(s), the secondary battery may be subject to CT imaging by the CT imaging device 107 and the CT-imaged second image may be transmitted from the CT imaging device 107 to the control circuit 103. As described above, the CT imaging device 107 may operate by a control signal from the control circuit 103, or may operate independently to transmit the second image to the control circuit 103 directly or indirectly.

In step (S5), the control circuit 103 may calculate the second position of the tab from the second image. Similar to the description above, the second position may be defined as the angle between the first straight line connecting the tab and the intersection of the core-long diameter and the core-short diameter in the electrode assembly and the second straight line connecting the intersection and the winding trailing end of the electrode assembly.

In some embodiments, the core-long diameter may be referred to as the core-major axis, and the core-short diameter may be referred to as the core-minor axis. In geometry, the major and minor axes of a deformed or distorted circle can represent the two perpendicular diameters of an ellipse. An ellipse is a closed curve in which the sum of the distances from one point on the curve to two fixed points (called foci) remains constant. The longer diameter of an ellipse may be referred to as the major axis, and the shorter diameter may be referred to as the minor axis. That is, the major axis is the longest diameter of the ellipse, which passes through the center and both foci, and the length of which may be the long diameter. In addition, the minor axis may be a short diameter perpendicular to the major axis, which passes through the center like the major axis, and the length of which may be the minor axis diameter.

In general, in a perfectly symmetrical circle, the major and minor axes can be the same because no matter which direction the distance is measured across the center, the distance always remains the same. That is, if the core of the above-described electrode assembly forms a perfect circle without being deformed or distorted, the major axis and minor axis may be the same. However, in most cases, the core of the electrode assembly may be deformed or distorted as the number of charge/discharge cycles elapses, and thus the length of the major axis and the minor axis may be different. In this way, the term "long diameter" may refer herein to the longer diameter of an ellipse, corresponding to the major axis, and the term "short diameter" may herein refer to the shorter diameter corresponding to the minor axis, but it should be understood that in some cases, "long-length" and "short-length" may be the same.

In step (S6), the control circuit 103 may determine that deformation has occurred to the electrode assembly of the secondary battery if the amount of change between the first and second positions is greater than a preset reference value. In some embodiments, the control circuit 103 may output the first and second images, the first and second positions, the amount of change between the first and second positions, the reference value and occurrence of deformation through the output device 102.

Various deformation analysis methods of secondary batteries according to the present disclosure will be explained below.

### [Preparation of secondary battery]

A cylindrical secondary battery having a jelly-roll shaped electrode assembly received in a cylindrical case (or cylindrical can) may first be prepared.

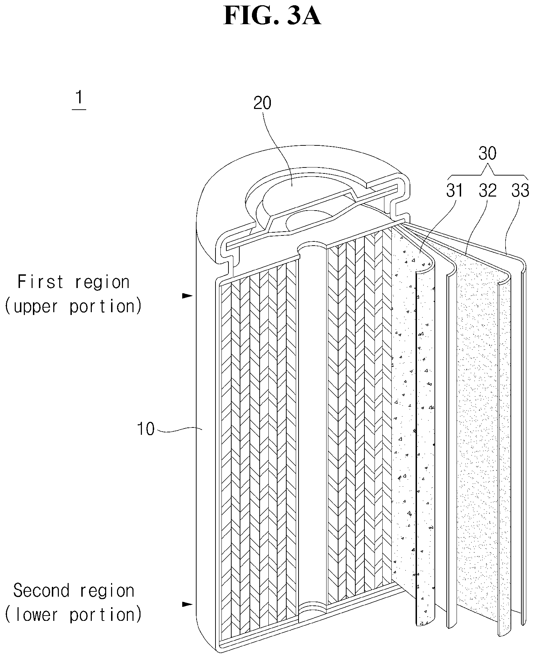

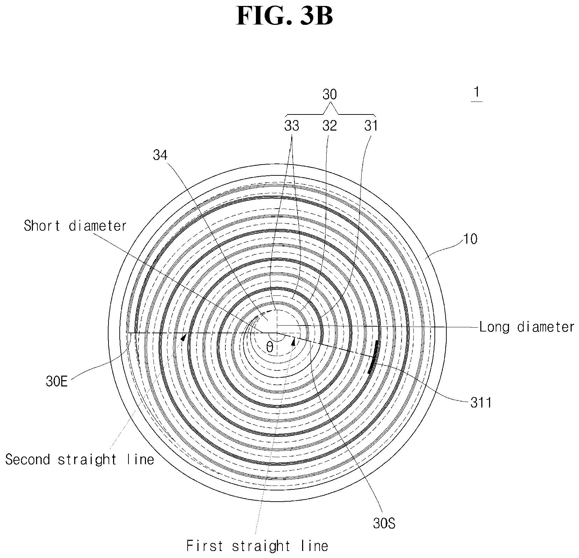

FIGS. 3A and 3B are longitudinal and cross-sectional views of an example secondary battery according to one or more embodiments. FIG. 3B is significantly exaggerated to illustrate a wound state of an electrode assembly. In actuality, the center of the electrode assembly has an empty space (or core) that is approximately circular, and there is almost no empty space between the outside of the electrode assembly and the inner surface of the case (or can). In practice, the electrode assembly may be wound to approximate a perfect circle, and FIG. 3B is shown in exaggeration to illustrate the winding structure as described above. In addition, one of ordinary skill in the art will understand that the CT image corresponding to FIG. 3B is the opposite of the shading in FIG. 3B.

In some embodiments, the jelly-roll shaped electrode assembly 30 of the secondary battery 1 may be received in the cylindrical case 10, and, after an electrolyte is injected so that the electrode assembly 30 is immersed in the cylindrical case 10 (optional), may be manufactured by coupling the cap assembly 20 to an open top end of the cylindrical case 10. In one or more embodiments, the electrode assembly 30 may be in the form of a jelly-roll manufactured by stacking a positive electrode plate 31 and a negative electrode plate 32 in a state in which a separator 33 is interposed therebetween and then winding in one direction. In FIG. 3B, 30S refers to the winding tip region of the electrode assembly 30 where winding begins, and 30E refers to the winding end portion of the electrode assembly 30 where winding ends. In some embodiments, the electrode assembly 30 may be in the form of a jelly-roll manufactured by stacking the positive electrode plate 31 and the negative electrode plate 32 with a separator 33 interposed therebetween and then winding it in one direction. In FIG. 3B, 30S refers to a winding leading end portion of the electrode assembly 30 where winding begins, and 30E refers to a winding trailing end portion of the electrode assembly 30 where winding ends. In embodiment(s), the phrases "winding leading end portion" and "winding trailing end portion" may refer to specific regions during the manufacturing process of an electrode assembly. This process may involve the generation of wound or rolled electrode structures commonly used in batteries, for example, lithium-ion cells. Specifically, in a circular electrode assembly of a secondary battery, the winding leading end portion may refer to an initial section or point where winding of the electrode plate begins. This may be a place where a first layer of an electrode plate is attached to or wrapped around a central core or a separator. In the circular electrode assembly of a secondary battery, the winding trailing end portion may refer to the last section or point where the winding process ends. This may be a place where the last layer of the electrode plate is attached and secured. In order to ensure that the electrode plate is securely fastened and has no loose ends or edges, the winding process at the winding trailing end portion may be properly terminated.

In one or more embodiments, the cylindrical case 10 may be made of metal, for example, steel, stainless steel, or nickel-plated steel. In some embodiments, a cylindrical case may include a receiving part in which an electrode assembly may be received and the upper portion may be open. In embodiment(s), the cylindrical case 10 may be made of metal, for example, steel, stainless steel, or nickel-plated steel. In one or more embodiments, the cylindrical case 110 may include a receiving part in which an electrode assembly may be received and the upper portion may be open. In some embodiments, the cylindrical case may include a receiving part in which an electrode assembly may be received and the upper portion thereof may be opened. In one or more embodiments, a beading part that is bent may be provided to be sealed after the cap assembly 20 is coupled to the opened upper portion of the cylindrical case 10, and to secure the cap assembly 20, the upper end may be bent to provide a crimping part. In embodiment(s), the beading part may be provided at a portion where the cap assembly and the cylindrical case contact each other, and may be indented toward the inside of the cylindrical case. In one or more embodiments, the cylindrical case may serve as a negative electrode terminal for connection to an external circuit. In embodiment(s), the cap assembly 20 may be constructed such that a cap-up and a safety vent may be in close contact with an airtight gasket installed in a space formed on the inner surfaces of the crimping part and the beading part of the cylindrical case 10. The central portion of the cap-up may protrude upward and thus may serve as a positive electrode terminal for connection to an external circuit. In some embodiments, a core 34 in the form of an empty space may be provided at the center of the electrode assembly 30 wound in a jelly-roll configuration. In embodiment(s), a center pin (not shown) made of a cylindrical metal material may be inserted into the core 34 to offer additional strength to the electrode assembly, and in some cases, after the electrodes are welded to the cylindrical case or cap assembly, the center pin may be removed. In one or more embodiments, a negative electrode tab may protrude from the lower end of the electrode assembly and be welded to the bottom surface of the cylindrical case and a positive electrode tab may protrude from the upper end of the electrode assembly and be welded to the cap assembly.

In some embodiments, the region of the secondary battery 1 subjected to CT imaging may include a first region adjacent to the cap assembly and/or a second region adjacent to the bottom surface of the can. In other words, the first region may be approximately an upper portion of the can and electrode assembly, and the second region may be approximately a lower portion of the can and electrode assembly. In some examples, the region subjected to CT imaging may further include a third region, which may be approximately a middle portion of the can and electrode assembly.

The cylindrical secondary battery described herein is provided merely by way of example for understanding the present disclosure, and the present disclosure is not limited to this cylindrical secondary battery. As an example, the present disclosure may also apply to the 18650 (18 mm in diameter, 65 mm in height) cylindrical battery, the 21700 (21 mm in diameter, 70 mm in height) cylindrical battery, or the 46800 (46 mm in diameter, 80 mm in height) cylindrical battery, and may also apply to cylindrical batteries that will be manufactured in the future.

### [First CT imaging]

When the cylindrical secondary battery is prepared in the above-described manner, a first image of a cross section perpendicular to the winding axis of the electrode assembly may be obtained by a CT imaging device. As described above, the first image may include images obtained by photographing a first region of the secondary battery (e.g., a portion above the electrode assembly), a second region (e.g., a portion below the electrode assembly) and/or a third region (e.g., the middle portion of the electrode assembly). The images obtained from the CT imaging device may be transmitted directly or indirectly to the control circuit 103 of the deformation analysis device 100 of the secondary battery.

### [Calculation of first position of tab]

When the first image is obtained through CT imaging, the first position of a tab 311 (e.g., a positive electrode tab or a negative electrode tab) appearing on the first image may be calculated. In some embodiments, the first position may be defined as an angle (θ) between a first straight line connecting the tab 311 and the intersection of the core-long diameter and the core-short diameter of the electrode assembly, and a second straight line connecting the intersection and the winding trailing end 30E of the electrode assembly. In one or more embodiments, one end of the first straight line may face the intersection, and the other end of the first straight line may face the center of the tab, one end of the tab, or the other end of the tab. In some embodiments, one end of the second straight line may face the intersection and the other end of the second straight line may face the winding trailing end of the positive electrode plate or the winding trailing end of the negative electrode plate.

### [Procedure of charge/discharge cycles of secondary battery]

As described above, the secondary battery may be charged and discharged by the charging/discharging device 108. When the secondary battery is charged and discharged once, it may be defined that one cycle or one lifespan of the secondary battery has elapsed. In some embodiments, images may be obtained from the CT imaging device every time approximately 50 to approximately 100 cycles of the secondary battery elapse by the charge/discharge device.

The charging/discharging device 108 may include a jig on which the secondary battery is mounted, a charging circuit connected to the secondary battery to provide charging power, a discharging circuit connected to the secondary battery and operating as a load, positive and negative electrode pins respectively connecting the charge circuit or the discharge circuit to positive and negative electrode terminals of the secondary battery, and a computer capable of storing the charge/discharge time, charge/discharge voltage, charge/discharge current, and number of cycles. The number of cycles obtained from the charge/discharge device may be transmitted directly or indirectly to the control circuit 103 of the deformation analysis device 100 of the secondary battery. In one or more embodiments, without the intervention of the charging/discharging device 108, when the image obtained from the CT imaging device 107 is transmitted to the control circuit 103, the number of cycles may also be manually input through the input device.

### [Second CT imaging]

As described above, after the secondary battery deteriorates as the charge and discharge cycles of the secondary battery progress, a second image of a cross-section perpendicular to the winding axis of the electrode assembly may be obtained by a CT imaging device. In some embodiments, the second image may be obtained by photographing a first region of the secondary battery (e.g., a portion above the case and electrode assembly), a second region of the secondary battery (e.g., a portion below the case and electrode assembly), or a third region of the secondary battery (e.g., the middle region of the case and electrode assembly). In one or more embodiments, the second image may be an image for the same region as the region photographs when obtaining the first image. The image obtained from the CT imaging device 107 may be transmitted directly or indirectly to the control circuit 103 of the deformation analysis device 100 of the secondary battery.

### [Calculation of second position of tab]

After the second image is obtained through CT imaging, the second position of the tab 311 (e.g., a positive electrode tab or a negative electrode tab) appearing on the second image may be calculated. In some embodiments, the second position may be defined as an angle (θ) between the first straight line connecting the tab 311 and the intersection of the core-long diameter and the core-short diameter of the electrode assembly, and the second straight line connecting the intersection and the winding trailing end 30E of the electrode assembly. In embodiment(s), one end of the first straight line may face the intersection, and the other end of the first straight line may face the center of the tab, one end of the tab, or the other end of the tab. In one or more embodiments, one end of the second straight line may face the intersection and the other end of the second straight line may face the winding trailing end of the positive electrode plate or the winding trailing end of the negative electrode plate.

### [Determination of deformation]

As described above, after the first and second positions of the tab are calculated, deformation may be determined through the amount of change between the first and second positions. In some embodiments, when obtaining the first and second images, the number of charge and discharge cycles may also be obtained. Accordingly, it can be determined whether the electrode is deformed as the number of cycles of the secondary battery elapses. In one or more embodiments, the amount of change (%) in the tab position may be calculated using the equation below.Amount of change in tab position(%)=[(second position of tab-first position of tab)/first position of tab]*100

In embodiment(s), if the amount of change in the tab is higher than the reference value, it may be determined that deformation has occurred in the electrode assembly. In some embodiments, the reference value may be approximately 1% to 5%. The above-mentioned reference values may vary depending on the electrochemical properties, size, usage environment, etc. of the secondary battery.

In general, if there is no deformation in the electrode assembly (e.g., electrodes), there will be no change between the first position obtained from the first image of the secondary battery and the second position obtained from the second image of the secondary battery. However, as the number of charge/discharge cycles of the secondary battery increases, the electrode assembly repeats expansion and contraction, and thus the electrode assembly may be deformed. In an example embodiment, the position of the tab 311 in the electrode assembly, the position of the winding leading end 30S, or the position of the winding trailing end 30E changes. With this taken into consideration, the first position of the tab may be calculated from the first image, the second position of the tab may be calculated from the second image, and when the amount of change between the first position and the second position is greater than a preset reference value, it may be determined that the case and/or the electrode assembly is deformed.

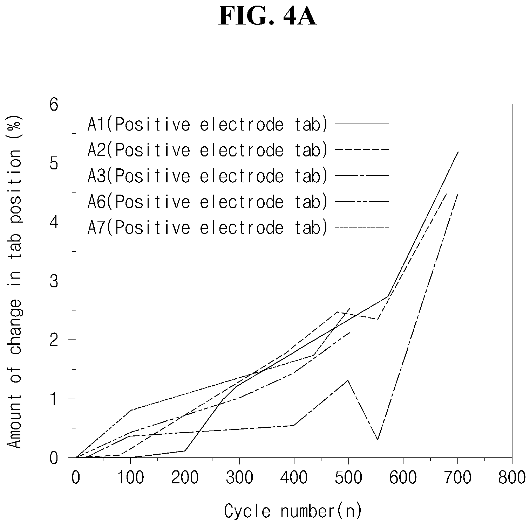

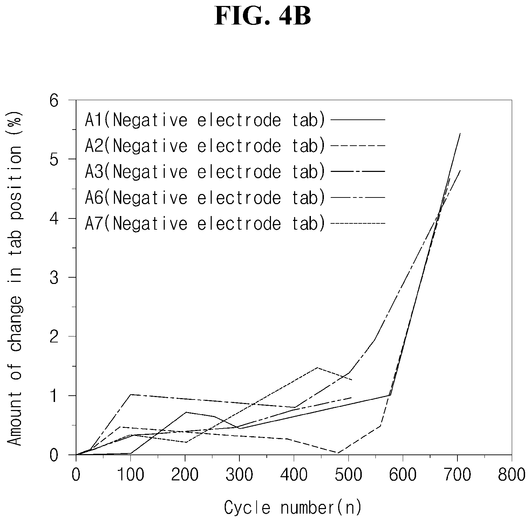

FIGS. 4A and 4B are graphs showing changes in tab positions relative to the number of charge/discharge cycles of an example secondary battery. In FIGS. 4A and 4B, the X-axis indicates the number of charge/discharge cycles, the Y-axis indicates the amount of change in the tab position (%) and A1 to A7 are numbers assigned to secondary batteries analyzed. In addition, FIG. 4A shows the amount of change for the positive electrode tab and FIG. 4B shows the amount of change for the negative electrode tab.

As shown in FIGS. 4A and 4B, it can be seen that the amount of change in the tab position increases as the number of charge and discharge cycles increases. As an example, as the number of charge/discharge cycles reaches approximately 650 times, the amount of change in the position of the positive electrode tab may increase by approximately more than 4.4%, and the amount of change in the position of the negative electrode tab may increase approximately more than 4.6%. Accordingly, in embodiment(s), it may be determined that the electrode assembly is deformed inside the case when the amount of change in the position of the tab is higher than approximately 4%.

As described above, in the deformation analysis device for a secondary battery and a method thereof, according to the embodiments of the present disclosure, a first image corresponding to the initial stage of the secondary battery and a second image showing the elapsed lifespan of the secondary battery may be obtained in a direction perpendicular to the winding axis of an electrode assembly, first and second positions of may be calculated from the first and second images and it may be determined whether the electrode assembly is deformed from the amounts of changes in the first and second positions. Therefore, according to the embodiments of the present disclosure, it is possible to accurately determine whether or not an electrode assembly provided in a secondary battery is deformed in a non-destructive manner without disassembling the secondary battery.

As described above, the present disclosure provides a deformation analysis device for a secondary battery and a method thereof, by which electrode deformation of the secondary battery can be accurately diagnosed by using CT (computed tomography) images, a non-destructive analysis method.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims.

## Claims

1. A method for analyzing deformation of a secondary battery having an electrode assembly with a tab received in a case, the deformation analysis method comprising:
obtaining a first image by performing computed tomography (CT) imaging on the secondary battery;
calculating a first position of the tab from the first image;
obtaining a number of charge and discharge cycles of the secondary battery after charging and discharging the secondary battery multiple times so that the secondary battery deteriorates;
obtaining a second image by performing CT imaging on the deteriorated secondary battery;
calculating a second position of the tab from the second image; and
determining that the electrode assembly is deformed if an amount of change between the first position and the second position is greater than a reference value.

2. The method as claimed in claim 1, wherein the first and second positions are defined as angles between a first straight line connecting the tab and an intersection of a core-long diameter and a core-short diameter of the electrode assembly, and a second straight line connecting the intersection and a winding trailing end of the electrode assembly.

3. The method as claimed in claim 1 or 2, wherein the secondary battery has a cylindrical shape.

4. The method as claimed in claim 1, 2 or 3, wherein the electrode assembly is wound in a cylindrical shape in which a positive electrode plate, a separator and a negative electrode plate are stacked.

5. The method as claimed in claim 4, wherein the tab includes a positive electrode tab coupled to the positive electrode plate or a negative electrode tab coupled to the negative electrode plate.

6. The method as claimed in claim 4 when dependent on claim 2, or claim 5 when dependent on claim 2, wherein a winding trailing end is the winding trailing end of the positive electrode plate or the negative electrode plate.

7. The method as claimed in any preceding claim, wherein the reference value is 1% to 5%.

8. A device for analyzing deformation of a secondary battery having an electrode assembly with a tab received in a case, the device comprising:
a control circuit;
a processor installed in the control circuit; and
a memory installed in the control circuit and operably coupled to the processor, wherein the processor is configured to execute a program code stored in the memory and is configured to:
obtain a first image by performing computed tomography (CT) imaging on the secondary battery;
calculate a first position of the tab from the first image;
obtain a number of charge and discharge cycles of the secondary battery after charging and discharging the secondary battery multiple times so that the secondary battery deteriorates;
obtain a second image by performing CT imaging on the deteriorated secondary battery;
calculate a second position of the tab from the second image; and
determine that the electrode assembly is deformed if an amount of change between the first position and the second position is greater than a reference value.

9. The device as claimed in claim 8, wherein the first and second positions are defined as angles between a first straight line connecting the tab and an intersection of a core-long diameter and a core-short diameter of the electrode assembly, and a second straight line connecting the intersection and a winding trailing end of the electrode assembly.

10. The device as claimed in claim 8 or 9, wherein the secondary battery has a cylindrical shape.

11. The device as claimed in claim 8, 9 or 10, wherein the electrode assembly is wound in a cylindrical shape in which a positive electrode plate, a separator and a negative electrode plate are stacked.

12. The device as claimed in claim 11, wherein the tab comprises a positive electrode tab coupled to the positive electrode plate or a negative electrode tab coupled to the negative electrode plate.

13. The device as claimed in claim 11 when dependent on claim 9, or claim 12 when dependent on claim 9, wherein a winding trailing end is the winding trailing end of the positive electrode plate or the negative electrode plate.

14. The device as claimed in any one of claims 8 to 13, wherein the reference value is 1% to 5%.
